(19) 

Europäisches
Patentamt
European
Patent Office
Office européen
des brevets

(11) **EP 1 923 373 B1**

(12) **EUROPEAN PATENT SPECIFICATION**

(45) Date of publication and mention
of the grant of the patent:
**20.01.2010 Bulletin 2010/03**

(51) Int Cl.:
***C04B 35/80*** *(2006.01)*     ***C04B 38/00*** *(2006.01)*

(21) Application number: **07018608.5**

(22) Date of filing: **21.09.2007**

(54) **Method for manufacturing honeycomb structured body**

Verfahren zur Herstellung eines Körpers mit Wabenstruktur

Procédé de fabrication d'un élément structuré en nid d'abeille

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **16.11.2006 PCT/JP2006/322878
14.12.2006 PCT/JP2006/324983**

(43) Date of publication of application:
**21.05.2008 Bulletin 2008/21**

(73) Proprietor: **IBIDEN CO., LTD.
Ogaki-shi
Gifu 503-8604 (JP)**

(72) Inventors:
• **Ohno, Kazushige
Ibi-gun
Gifu 501-0695 (JP)**

• **Ido, Takahiko
Ibi-gun
Gifu 501-0695 (JP)**
• **Kasai, Chizuru
Ibi-gun
Gifu 501-0695 (JP)**

(74) Representative: **HOFFMANN EITLE
Patent- und Rechtsanwälte
Arabellastrasse 4
81925 München (DE)**

(56) References cited:
**EP-A- 1 652 831**     **EP-A- 1 738 814
US-A1- 2006 177 629**

**Description**

TECHNICAL FIELD

The present invention relates to a method for manufacturing a honeycomb structured body.

BACKGROUND ART

Conventionally, honeycomb catalysts formed by supporting catalyst components on a honeycomb structured body, which are used for converting exhaust gases of vehicles, are being manufactured by supporting materials having a large specific surface area such as activated alumina and a catalyst metal such as platinum on the surface of a cordierite-based honeycomb structured body having an integral structure and low thermal expansion. In addition, an alkaline earth metal such as barium (Ba) is supported on the honeycomb catalyst of this kind as a NOx adsorber in order to treat NOx in an atmosphere of excess oxygen like those in a lean burn engine and a diesel engine. Here, the more improvements in the performance of converting the exhaust gases require that the probability of contact of the exhaust gases with a catalyst noble metal and the NOx adsorber is increased. In order to do so, it is necessary that a carrier has a larger specific surface area, that a particle diameter of the noble metal is reduced, and that the noble metal particles are highly dispersed. And so, as a honeycomb structured body containing a material having a large specific surface area, for example, honeycomb structured bodies formed by extrusion-molding inorganic particles and inorganic fibers with an inorganic binder are known (for example, see Patent Documents 1 to 4).

Patent Document 1: JP-A 2005-218935
Patent Document 2: JP-A 2005-349378
Patent Document 3: JP-A 05-213681
Patent Document 4: US 2006/177629 A1

DISCLOSURE OF THE INVENTION

PROBLEMS TO BE SOLVED BY THE INVENTION

However, as disclosed in Patent Documents 1 to 4, when a honeycomb structured body is manufactured by undergoing a step of extrusion-molding inorganic particles and inorganic fibers with an inorganic binder, cracks or deformations may be generated in a molded body or a fired body upon carrying out a heating treatment (drying treatment, degreasing treatment, firing treatment and the like) on the extrusion-molded body.

MEANS FOR SOLVING THE PROBLEMS

The present inventors made earnest investigations in order to solve the above-mentioned problems, and consequently have found that the generation of cracks or deformations described above results from the composition of a raw material composition to be extrusion-molded, that is, when an amount of a solid matter is small in an inorganic binder solution used upon preparing a raw material composition, an amount of a solvent such as water is relatively large, and therefore an amount of a solvent contained in the raw material composition such as water becomes large, and consequently if carrying out an extrusion-molding step and a subsequent heating treatment such as drying treatment on such raw material composition, shrinkage of the molded body becomes large, and cracks or deformations described above are generated.
Furthermore, the present inventors found that for preventing the generation of cracks and deformations described above, it is only necessary to adjust a concentration of an inorganic binder contained in the inorganic binder solution in a prescribed range, and have completed the present invention.
That is, a method for manufacturing a honeycomb structured body of the present invention is a method for manufacturing a honeycomb structured body, comprising: a preparing step of mixing: inorganic particles; at least one of inorganic fibers and inorganic whiskers; and an inorganic binder solution, to prepare a raw material composition; a molding step of manufacturing a pillar-shaped honeycomb molded body having a large number of cells disposed in parallel with one another in a longitudinal direction with a cell wall therebetween by extrusion-molding the raw material composition; and a firing step of carrying out a firing treatment on the honeycomb molded body to manufacture a honeycomb fired body, wherein a blending amount of the inorganic binder solution is 30 to 60% by weight to the total amount of the inorganic particles, at least one of inorganic fibers and inorganic whiskers, and the inorganic binder solution, and a concentration of the inorganic binder solution is 35 to 50% by weight.
In the method for manufacturing a honeycomb structured body of the present invention, the inorganic binder solution is desirably at least one kind selected from the group consisting of alumina sol, silica sol, titania sol, a suspension of sepiolite and a suspension of attapulgite.

EFFECTS OF THE INVENTION

In the method for manufacturing a honeycomb structured body of the present invention, it is possible to manufacture a honeycomb structured body without causing deformations and cracks in a honeycomb molded body and a honeycomb fired body in a manufacturing step of the honeycomb structured body since an inorganic binder solution having a prescribed concentration is mixed in a raw material composition with a prescribed amount.

BEST MODE FOR CARRYING OUT THE INVENTION

Hereinafter, the method for manufacturing a honeycomb structured body of the present invention will be described in detail.
The method for manufacturing a honeycomb structured body of the present invention is a method for manufacturing a honeycomb structured body comprising: a preparing step of mixing: inorganic particles; at least one of inorganic fibers and inorganic whiskers; and an inorganic binder solution, to prepare a raw material composition; a molding step of manufacturing a pillar-shaped honeycomb molded body having a large number of cells disposed in parallel with one another in a longitudinal direction with a cell wall therebetween by extrusion-molding the raw material composition; and a firing step of carrying out a firing treatment on the honeycomb molded body to manufacture a honeycomb fired body, wherein a blending amount of the inorganic binder solution is 30 to 60% by weight to the total amount of the inorganic particles, at least one of the inorganic fibers and the inorganic whiskers, and an inorganic binder solution, and a concentration of the inorganic binder solution is 35 to 50% by weight.
Further, in the present invention, the concentration of the inorganic binder refers to a weight percentage of an inorganic binder content to the total weight of an inorganic binder solution.
Here, in the present specification, a pillar shape includes arbitrary pillar shapes such as a round pillar shape, a cylindroid shape, and a polygonal pillar shape.
Hereinafter, the method for manufacturing a honeycomb structured body of the present invention will be described step by step.

(1) In the method for manufacturing a honeycomb structured body of the present invention, first, a preparing step is carried out to prepare a raw material composition comprising: inorganic particles; at least one of inorganic fibers and inorganic whiskers; and an inorganic binder solution.

As the raw material composition, as needed, a substance further containing an organic binder, a dispersion medium and a forming auxiliary, which are appropriately added according to the moldability of the raw material composition, can be used.
In the method for manufacturing a honeycomb structured body of the present invention, as the inorganic binder solution, an inorganic binder solution having a lower limit of concentration of 35% by weight and an upper limit of 50% by weight is used.
By using the raw material composition containing such an inorganic binder solution to manufacture the honeycomb structured body, cracks and deformations are not generated in the honeycomb molded body and the honeycomb fired body during a manufacturing step.
On the other hand, when the concentration of the inorganic binder solution is less than 35% by weight, since an amount of a solvent such as water contained in the raw material composition is large, cracks or deformations may be generated in the honeycomb molded body or the honeycomb fired body during a manufacturing step of the honeycomb structured body though the good moldability can be secured upon extrusion-molding the raw material composition. In addition, when the concentration of the inorganic binder solution is more than 50% by weight, the moldability is poor upon extrusion-molding the raw material composition, and therefore it may be impossible to manufacture a molded body having a desired configuration.
Here, the inorganic binder solution has a desirable upper limit of concentration of 45% by weight.
As the inorganic binder solution, inorganic sols and suspensions of a clay binder can be used, and the specific examples of the inorganic sols include alumina sol, silica sol, titania sol, and the like. Specific examples of the clay binders include clays having a multiple-chain structure such as white clay, kaolin, montmorillonite, sepiolite, attapulgite, and the like. These inorganic binder solutions may be used alone or in combination of two or more kinds.
Among these, at least one kind selected from the group consisting of alumina sol, silica sol, titania sol, the suspension of sepiolite and the suspension of attapulgite is desirable.
Desirably, an average particle diameter of the inorganic binder contained in the inorganic binder solution has a lower limit of 10 nm and an upper limit of 50 nm. The reason for this is that a honeycomb structured body having a large specific surface area and high strength can be manufactured by undergoing the manufacturing steps described later. When an average particle diameter of the inorganic binder is less than 10 nm or more than 50 nm, the strength of the manufactured honeycomb structured body may become insufficient. The reason for this is presumably described as follows.

That is, in the method for manufacturing a honeycomb structured body of the present invention, presumably, the inorganic binder mainly plays a role of bonding the inorganic particles, the inorganic fibers and the inorganic whiskers, and the inorganic binder presumably exerts an adhesive function by interposing between the inorganic fibers (inorganic whiskers) and the inorganic particles to simultaneously come into contact with the inorganic fibers (inorganic whiskers) and the inorganic particles, or by interposing between each of the inorganic particles to simultaneously come into contact with the different inorganic particles.

Here, presumably, when the average particle diameter is less than 10 nm, it is difficult to simultaneously come into contact with the inorganic fibers (inorganic whiskers) and the inorganic particles or to simultaneously come into contact with the different inorganic particles, and therefore there are cases where a sufficient adhesive strength cannot be obtained, and on the other hand, when the average particle diameter is more than 50 nm, the number of points to be bonded decreases and consequently the strength becomes insufficient.

Furthermore, when an average particle diameter of the inorganic binder is more than 50 nm, the specific surface area of the manufactured honeycomb structured body is not increased sufficiently, and it is disadvantageous when the honeycomb structured body is used as a catalyst supporting carrier.

In addition, a more desired average particle diameter of the inorganic binder is 20 nm in the lower limit and 40 nm in the upper limit.

In addition, the average particle diameter of the inorganic binder can be measured, for example, by the following method.

Specifically, when the inorganic binder is silica sol, first, the silica sol is dried, and BET specific surface area thereof is measured.

Next, assumed that silica particles in the silica sol are dense spherical particles, the BET specific surface area is determined from the following equation (1) :

$$\mathtt{BET\ specific\ surface\ area = (6000/\rho)/particle\ diameter}\quad \cdots (1)$$

(in the equation, $\rho$ is a true density (2.2 g/cm$^3$) of silica)

Further, the average particle diameter of the inorganic binder can be also directly measured by using, for example, TEM (transmission electron microscope).

In addition, in the method for manufacturing a honeycomb structured body, a blending amount of the inorganic binder solution has a lower limit of 30% by weight and an upper limit of 60% by weight to the total amount of the inorganic particles, at least one of the inorganic fibers and the inorganic whiskers, and the inorganic binder solution.

The reason for this is that when the blending amount of the inorganic binder solution is less than 30% by weight, the strength of the manufactured honeycomb structured body may be deteriorated since an amount of the inorganic binder contained in the honeycomb structured body is small, and on the other hand, when the blending amount of the inorganic binder solution is more than 60% by weight, the moldability of the raw material composition tends to be deteriorated.

A blending amount of the inorganic binder solution has a desirable upper limit of 50% by weight to the total amount of: the inorganic particles, at least one of the inorganic fibers and inorganic whiskers, and the inorganic binder solution.

Examples of the inorganic particles include particles of alumina, silica, zirconia, titania, ceria, mullite, zeolite and the like. These particles may be used alone or in combination of two or more kinds.

Among these particles, alumina particles and ceria particles are particularly desirable.

A blending amount of the inorganic particles has a desirable lower limit of 30% by weight, a more desirable lower limit of 40% by weight, and a furthermore desirable lower limit of 50 o by weight to the total amount of the inorganic particles, at least one of the inorganic fibers and the inorganic whiskers, and the solid matter of the inorganic binder solution (hereinafter, referred to as the total amount of essential raw materials).

On the other hand, the blending amount of the inorganic particles is 85% by weight as a desirable upper limit, 80% by weight as a more desirable upper limit, and 75% by weight as a furthermore desirable upper limit.

When the blending amount of the inorganic particles is less than 30% by weight, the specific surface area of the manufactured honeycomb structured body is reduced since the amount of the inorganic particles contributing to the increase of specific surface area is relatively decreased, and therefore it may become impossible to highly disperse a catalyst component upon supporting the catalyst component on a catalyst supporting carrier. On the other hand, when the blending amount of the inorganic particles is more than 85% by weight, the strength of the manufactured honeycomb structured body tends to be deteriorated since the amounts of the inorganic binder, the inorganic fibers and the inorganic whiskers, contributing to the improvement of the strength, are relatively decreased.

In addition, secondary particles of the inorganic particles mixed in the raw material composition desirably have an average particle diameter of 0.5 to 20 $\mu$m.

When the average particle diameter of secondary particles is less than 0.5 $\mu$m, the manufactured honeycomb structured body is densified, and therefore the permeability of gases may be low upon using the honeycomb structured body as a catalyst supporting carrier, and on the other hand, when the average particle diameter of secondary particles is more than 20 $\mu$m, the specific surface area of the manufactured honeycomb structured body tends to be reduced.

Incidentally, primary particles of the inorganic particles desirably have an average particle diameter of 5 to 100 nm.

In the present specification, the primary particles refer to particles forming a powder or agglomerate, and also refer to particles of a minimum unit existing without breaking a bond between molecules. In addition, the secondary particles refer to particles formed by the agglomeration of the primary particles.

In addition, the inorganic particles (secondary particles) desirably have a specific surface area of 50 to 300 $m^2$/g. The reason for this is that when the specific surface area is less than 50 $m^2$/g, the specific surface area of the manufactured honeycomb structured body tends to be reduced, and on the other hand, when the specific surface area is more than 300 $m^2$/g, the specific surface area of the honeycomb structured body is not increased so much even though the specific surface area of the inorganic particles (secondary particles) is increased.

In addition, in the method for manufacturing a honeycomb structured body of the present invention, the inorganic particles (secondary particles) desirably have an average aspect ratio of 1 to 5.

Examples of the inorganic fibers or inorganic whiskers include inorganic fibers and inorganic whiskers containing alumina, silica, silicon carbide, silica-alumina, glass, potassium titanate, aluminum borate, or the like.

These inorganic fibers or inorganic whiskers may be used alone or in combination of two or more kinds.

In addition, in the method for manufacturing a honeycomb structured body of the present invention, the inorganic fibers or the inorganic whiskers have an average aspect ratio of more than 5.

Further, an average aspect ratio of each of the inorganic fibers and inorganic whiskers is desirably 10 to 1000.

The total blending amount of at least one of the inorganic fibers and inorganic whiskers is 3% by weight as a desirable lower limit to the total amount of essential raw materials, 5 by weight as a more desirable lower limit, and 8% by weight as a furthermore desirable lower limit. On the other hand, the blending amount of at least one of the inorganic fibers and inorganic whiskers is 50% by weight as a desirable upper limit, 40% by weight as a more desirable upper limit, and 30% by weight as a furthermore desirable upper limit.

When the total blending amount of at least one of the inorganic fibers and inorganic whiskers is less than 3% by weight, the strength of the manufactured honeycomb structured body may be deteriorated, and on the other hand, when this total blending amount is more than 50% by weight, since the amount of the inorganic particles contributing to the increase of specific surface area is relatively decreased in the manufactured honeycomb structured body, when the manufactured honeycomb structured body is used as a catalyst supporting carrier, the specific surface area of the honeycomb structured body may be reduced, and therefore it may become impossible to highly disperse a catalyst component upon supporting the catalyst component on a catalyst supporting carrier.

In the raw material composition, an organic binder, a dispersion medium, and a forming auxiliary may be mixed. The organic binder is not particularly limited, and examples of the binder include methyl cellulose, carboxymethyl cellulose, hydroxyethyl cellulose, polyethylene glycol, and the like.

These binders may be used alone or in combination of two or more kinds.

A blending amount of the organic binder is desirably 1 to 10 parts by weight to 100 parts by weight of the total solid matter of the inorganic particles, the inorganic fibers, the inorganic whiskers and the inorganic binder solution.

The forming auxiliary is not particularly limited, and examples of the forming auxiliary include ethylene glycol, dextrin, fatty acid, fatty acid soap, polyalcohol and the like.

Among these, oleic acid is desirably further mixed in order to further improve the moldability.

A method for preparing the raw material composition is not particularly limited, and it is preferred to mix and/or knead a raw material, and the raw material may be mixed with, for example, a mixer or an attritor, or may be kneaded well with a kneader.

(2) Next, a molding step is carried out to manufacture a pillar-shaped honeycomb molded body having a large number of cells disposed in parallel with one another in a longitudinal direction with a cell wall therebetween by extrusion-molding the raw material composition.

(3) A drying step is carried out as needed on the honeycomb molded body.

The drying step can be carried out with, for example, a microwave drying apparatus, a hot-air drying apparatus, a dielectric drying apparatus, a reduced pressure drying apparatus, a vacuum drying apparatus, a freeze drying apparatus, and the like.

(4) A degreasing step is carried out, as needed, on the honeycomb molded body dried as needed.

In this case, degreasing conditions are not particularly limited and appropriately selected according to kinds and amounts of organic substances contained in the molded body, and about 400°C and 2 hours are desirable as these conditions.

(5) Next, a firing step of carrying out a firing treatment on the honeycomb molded body dried and degreased as needed to manufacture a honeycomb fired body is carried out.

A firing temperature in the firing treatment is not particularly limited, and a temperature of 500 to 1200°C is desirable, and a temperature of 600 to 1000°C is more desirable.

When the firing temperature is less than 500°C, an adhesive function of the inorganic binder is hard-to-develop and sintering of the inorganic particles is also hard-to-proceed, and therefore the strength of the manufactured honeycomb structured body may be deteriorated, and when it is more than 1200°C, the sintering of the inorganic particles proceeds excessively and the specific surface area per unit volume of the manufactured honeycomb structured body is reduced, and therefore it may become impossible to sufficiently highly disperse a catalyst component to be supported on a honeycomb structured body upon using the honeycomb structured body as a catalyst supporting carrier.

By undergoing these steps, a pillar-shaped honeycomb fired body having a large number of cells disposed in parallel with one another in a longitudinal direction with a cell wall therebetween can be manufactured.

The honeycomb fired body itself, manufactured by undergoing these steps, is a honeycomb structured body, and in the method for manufacturing a honeycomb structured body of the present invention, the overall steps can be terminated at the firing step.

Further, a sealing material layer (coat layer) is formed on the periphery of the honeycomb fired body manufactured by the above-mentioned manufacturing method, and the resulting honeycomb fired body may be used as a finished product of the honeycomb structured body. The honeycomb structured body comprising one honeycomb fired body is also referred to as an integral honeycomb structured body in the following.

Here, a method for forming the sealing material layer (coat layer) is similar to a method for forming a sealing material layer (coat layer) on the periphery of a honeycomb block upon manufacturing the honeycomb structured body by binding a plurality of the honeycomb fired bodies together to form the honeycomb block to be described later.

Further, in the method for manufacturing a honeycomb structured body of the present invention, the honeycomb structured body may be manufactured by the above-mentioned method, and then binding a plurality of these honeycomb fired bodies together to form the honeycomb block.

In this case, the following method may be used.

Hereinafter, the honeycomb structured body formed by binding a plurality of the honeycomb fired bodies together is also referred to as an aggregated honeycomb structured body.

That is, a sealing material paste to become a sealing material layer (adhesive layer) is applied to the obtained honeycomb fired body to bind the honeycomb fired body in sequence, and thereafter the sealing material paste is dried and solidified to manufacture an aggregate of the honeycomb fired bodies having a prescribed size bound by interposing the sealing material layer (adhesive layer).

In addition, a prescribed number of the honeycomb fired bodies are piled up by interposing a spacer, and then a sealing material paste is filled into a gap between the honeycomb fired bodies, and thereafter the sealing material paste is dried and solidified to manufacture an aggregate of the honeycomb fired bodies having a prescribed size bound by interposing the sealing material layer (adhesive layer).

The sealing material paste for forming an adhesive layer is not particularly limited, and for example, a mixture of an inorganic binder and ceramic particles, a mixture of an inorganic binder and inorganic fibers, or a mixture of an inorganic binder, ceramic particles and inorganic fibers can be used.

In addition, an organic binder may be added to these sealing material pastes.

The organic binder is not particularly limited, and examples of the binder include polyvinyl alcohol, methyl cellulose, ethyl cellulose, carboxymethyl cellulose and the like.

These binders may be used alone or in combination of two or more kinds.

A thickness of the sealing material layer (adhesive layer) is desirably 0.5 to 5 mm.

When the thickness of the sealing material layer (adhesive layer) is less than 0.5 mm, sufficient adhesive strength may not be obtained, and when the thickness of the sealing material layer (adhesive layer) is more than 5 mm, since the sealing material layer (adhesive layer) is a portion not functioning as a catalyst supporting carrier, the specific surface area per unit volume of the honeycomb structured body is reduced, and therefore it may become impossible to sufficiently highly disperse a catalyst component upon supporting the catalyst component on a catalyst supporting carrier.

Further, when the thickness of the sealing material layer (adhesive layer) is more than 5 mm, pressure loss may become high.

Here, the number of the honeycomb fired bodies to be bound may be appropriately determined according to the size of the honeycomb structured body. An aggregate of the honeycomb fired bodies formed by binding the honeycomb fired bodies together by interposing the sealing material layer (adhesive layer) is appropriately cut and polished as needed to form a honeycomb block.

Next, a sealing material layer (coat layer) is formed by applying a sealing material paste for forming a coat layer onto the periphery of the honeycomb block as needed, and drying and solidifying the sealing material paste.

By forming the sealing material layer (coat layer), the periphery of the honeycomb block can be protected, and consequently the strength of the honeycomb structured body can be improved.

The sealing material paste for forming the coat layer is not particularly limited, and it may be made from the same materials as of the sealing material paste for forming the adhesive layer, or may be made from the different materials from those of the sealing material paste for forming the adhesive layer.

In addition, when the sealing material paste for forming the coat layer is made from the same materials as of the sealing material paste for forming the adhesive layer, blending ratios of the composition of both the sealing material pastes may be the same as or different from each other.

A thickness of the sealing material layer (coat layer) is not particularly limited, and this thickness is desirably 0.1 to 2 mm. When the thickness is less than 0.1 mm, there may be a possibility that the periphery cannot be protected fully and the strength cannot be improved, and when the thickness is more than 2 mm, the specific surface area per unit volume of the honeycomb structured body may be reduced, and therefore it may become impossible to sufficiently highly disperse a catalyst component upon supporting the catalyst component on a catalyst supporting carrier.

In addition, in the method for manufacturing a honeycomb structured body of the present invention, it is preferred to calcine the honeycomb fired bodies after binding a plurality of the honeycomb fired bodies together by interposing the sealing material layer (adhesive layer) (however, when a sealing material layer (coat layer) is provided, calcine them after forming the coat layer).

The reason for this is that when an organic binder is contained in the sealing material layer (adhesive layer) and the sealing material layer (coat layer), the organic binder can be degreased and removed by calcination.

The conditions of the calcination are appropriately determined according to kinds and amounts of organic substances contained, and about 700°C and 2 hours are desirable as these conditions.

Next, the configuration of the honeycomb structured body manufactured by the method for manufacturing a honeycomb structured body of the present invention will be described referring to drawings.

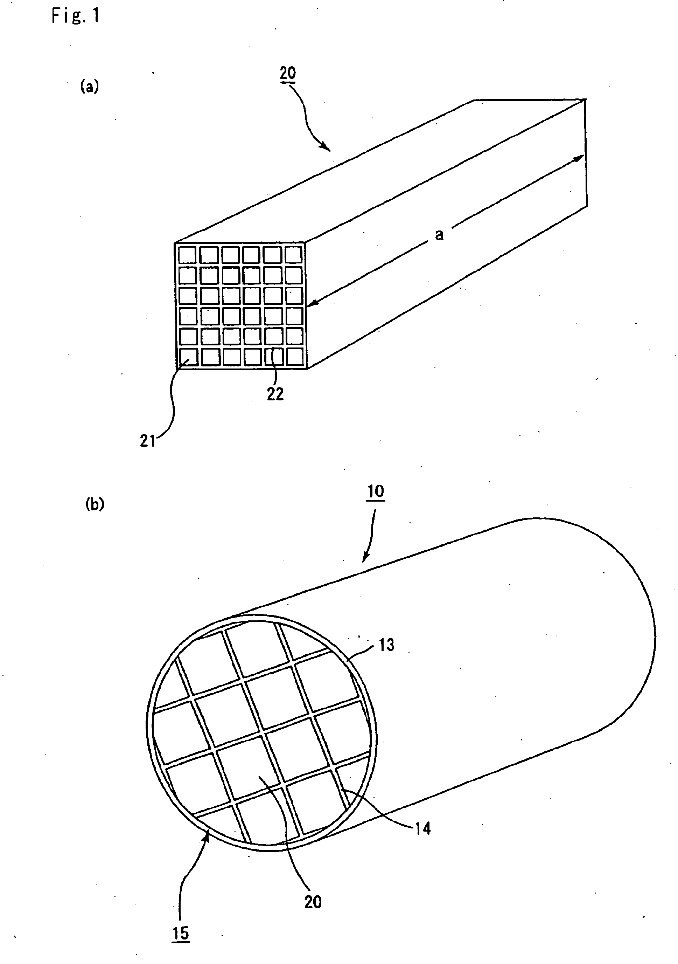

Fig. 1(a) is a perspective view schematically showing one example of a honeycomb fired body manufactured by the method for manufacturing a honeycomb structured body of the present invention, and Fig. 1(b) is a perspective view schematically showing one example of a honeycomb structured body formed by using the honeycomb fired body shown in Fig. 1(a).

As shown in Fig. 1(a), a honeycomb fired body 20 has a square pillar shape, and has a large number of cells 21 disposed in parallel with one another in a longitudinal direction (the direction shown by an arrow a in Fig. 1(a)) with a cell wall 22 therebetween.

As shown in Fig. 1(b), in a honeycomb structured body 10, a plurality of the honeycomb fired bodies 20 shown in Fig. 1 (a) are bound together by interposing a sealing material layer (adhesive layer) 14 to configure a ceramic block 15, and a sealing material layer (coat layer) 13 is formed on the periphery thereof.

In the honeycomb fired body, a thickness of the cell wall is not particularly limited, and the thickness of the cell wall has a desirable lower limit of 0.05 mm, a more desirable lower limit of 0.10 mm, and a particularly desirable lower limit of 0.15 mm. On the other hand, the thickness of the cell wall has a desirable upper limit of 0.35 mm, a more desirable upper limit of 0.30 mm, and a particularly desirable upper limit of 0.25 mm.

When the thickness of the cell wall is less than 0.05 mm, the strength of the honeycomb fired body may be deteriorated, and on the other hand, when the thickness of the cell wall is more than 0.35 mm, the performance of converting the exhaust gases may be deteriorated since a contacting area with the exhaust gases is reduced, and the gases do not permeate deeply into a catalyst supporting carrier and therefore the catalyst supported on the inner surface in the cell wall hardly comes into contact with the gases upon using the honeycomb structured body as a catalyst supporting carrier for converting the exhaust gases.

In addition, a cell density of the honeycomb fired body has a desirable lower limit of 15.5 pcs/cm$^2$ (100 cpsi), a more desirable lower limit of 46.5 pcs/cm$^2$ (300 cpsi), and a furthermore desirable lower limit of 62 pcs/cm$^2$ (400 cpsi). On the other hand, the cell density has a desirable upper limit of 186 pcs/cm$^2$ (1200 cpsi), a more desirable upper limit of 170.5 pcs/cm$^2$ (1100 cpsi), and a furthermore desirable upper limit of 155 pcs/cm$^2$ (1000 cpsi).

When the cell density is less than 15.5 pcs/cm$^2$, an area of the cell wall contacting the exhaust gases within the honeycomb fired body may be reduced upon using the honeycomb structured body as a catalyst supporting carrier for converting the exhaust gases, and when the cell density is more than 186 pcs/cm$^2$, pressure loss may become high and also manufacturing of the honeycomb fired body may become difficult.

In addition, desirably, a cross-sectional area of the honeycomb fired body in the direction perpendicular to the longitudinal direction of the honeycomb fired body has a lower limit of 5 cm$^2$ and an upper limit of 50 cm$^2$, and particularly when the honeycomb structured body is formed by binding a plurality of the honeycomb fired bodies together, the cross-sectional area is desirably within the above-mentioned range.

When the cross-sectional area is less than 5 cm$^2$, since an area of the sealing material layer (adhesive layer), with which a plurality of the honeycomb fired bodies are bound, is relatively increased in a cross section perpendicular to the longitudinal direction of the honeycomb structured body, an area on which a catalyst can be supported may be relatively reduced upon using the honeycomb structured body as a catalyst supporting carrier. On the other hand, when the cross-sectional area is more than 50 cm$^2$, it may become impossible to sufficiently suppress thermal stress generated in the honeycomb fired body since the honeycomb fired body is large.

The cross-sectional area has a more desirable lower limit of 6 cm$^2$, and a particularly desirable lower limit of 8 cm$^2$, and a more desirable upper limit of 40 cm$^2$, and a particularly desirable upper limit of 30 cm$^2$.

A shape of a cross section perpendicular to the longitudinal direction of a cell formed in the honeycomb fired body is not particularly limited, and an approximate triangle or an approximate hexagon may be used other than a rectangle like the honeycomb fired body shown in Fig. 1(a).

Further, when the sealing material layer (adhesive layer) and the sealing material layer (coat layer) are formed in the honeycomb structured body, desirably, a ratio of the total cross-sectional area of the honeycomb fired bodies to the cross-sectional area of the honeycomb structured body is 90% or more in a cross section perpendicular to the longitudinal direction of the honeycomb structured body. The reason for this is that when this ratio is less than 90%, the specific surface area of the honeycomb structured body is reduced.

In addition, desirably, the specific surface area per unit area of the honeycomb structured body is 25000 m$^2$/L (litter) or more.

The reason for this is that when the specific surface area is within the above range, it becomes easy to sufficiently broadly support and disperse a catalyst on the whole honeycomb structured body.

Incidentally, a desirable upper limit of the specific surface area is 70000 m$^2$/L in consideration of the limit of dispersion of the catalyst (for example, platinum).

It is more desirable that a bending strength of the honeycomb structured body is higher, and specifically, it is desirable that the bending strength is 3.0 MPa or more when the honeycomb fired body has a rectangular pillar shape of 37 mm $\times$ 37 mm $\times$ 75 mm.

The reason for this is that a possibility of destruction of the honeycomb structured body due to thermal stress and the like generated upon using the honeycomb structured body becomes less.

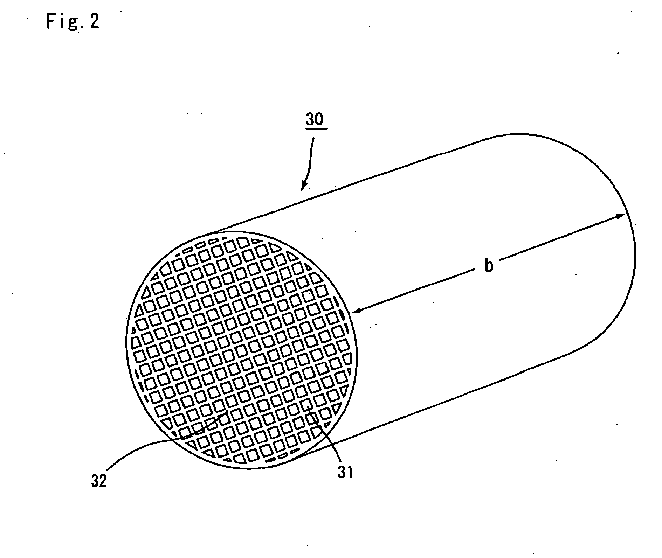

In addition, the honeycomb structured body manufactured by the method for manufacturing a honeycomb structured body of the present invention is not limited to an aggregated honeycomb structured body as shown in Fig. 1 (b), and it may be an integral honeycomb structured body as shown in Fig. 2.

Fig. 2 is a perspective view schematically showing another example of the honeycomb structured body manufactured by the method for manufacturing a honeycomb structured body of the present invention.

A honeycomb structured body 30 shown in Fig. 2 is formed by a honeycomb fired body having a pillar shape, and having a large number of cells 31 (in the direction shown by an arrow b in Fig. 2) disposed in parallel with one another in a longitudinal direction with a cell wall 32 therebetween.

Further, in the integral honeycomb structured body of this kind, a sealing material layer (coat layer) may be formed on the periphery of the honeycomb fired body.

In addition, a catalyst is desirably supported on the honeycomb structured body having such a configuration. The reason for this is that the honeycomb structured body can be suitably used as a catalyst supporting carrier.

The catalyst is not particularly limited, and examples of the catalyst include noble metals, alkali metals, alkaline earth metals, oxides and the like. These may be used alone or in combination of two or more kinds.

Examples of the noble metals include platinum, palladium, rhodium and the like, examples of the alkali metals include potassium, sodium and the like, examples of the alkaline earth metals include barium and the like, and examples of the oxides include perovskite ($La_{0.75}K_{0.25}MnO_3$ and the like), $CeO_2$ and the like.

The applications of the honeycomb structured body on which a catalyst is supported as described above is not particularly limited, and the honeycomb structured body can be used for, for example, the so-called three-way catalyst for converting the exhaust gases of automobiles or a NOx adsorbing catalyst.

Incidentally, a timing of supporting a catalyst is not particularly limited, and the catalyst may be supported after manufacturing the honeycomb structured body, or may be supported on inorganic particles in the raw material composition. Further, a method for supporting a catalyst is not particularly limited, and the catalyst can be supported, for example, by an impregnation method.

Here, the method for manufacturing a honeycomb structured body of the present invention and the honeycomb structured body manufactured by this method has been described with examples mainly using the honeycomb structured body as a catalyst supporting carrier, but the honeycomb structured body can be used for other purposes besides a catalyst supporting carrier, and it can be used for adsorbents which adsorb gas components or liquid components, for example.

EXAMPLES

Hereinafter, the present invention will be described in more detail by way of Examples, but the present invention is not limited to these Examples.

(Example 1)

(1) 2250 g of γ alumina particles (secondary particles having an average particle diameter of 2 μm) as inorganic particles, 680 g of aluminum borate whiskers (fiber diameters are 0.5 to 1 μm, fiber lengths are 10 to 30 μm) as inorganic fibers, and 2600 g of silica sol (an average particle diameter is 15 nm, concentration is 35% by weight) as an inorganic binder solution were mixed, and further to the resulting mixture, 320 g of methyl cellulose as an organic binder, 290 g of UNILUB (manufactured by NOF Corp.) as a lubricant, and 225 g of glycerin (manufactured by NOF Corp.) as a plasticizer were added, and the resulting mixture was further mixed and kneaded to prepare a raw material composition. Next, this raw material composition was extrusion-molded with an extrusion-molding machine to manufacture a honeycomb molded body.

(2) Next, the honeycomb molded body was dried well with a microwave drying apparatus and a hot-air drying apparatus, and further kept at 400°C for 2 hours to be degreased.
Thereafter, a firing treatment was carried out on the honeycomb molded body while keeping the honeycomb molded body at 900°C for 2 hours to manufacture a honeycomb fired body having a rectangular pillar shape (37 mm x 37 mm x 75 mm), a cell density of 93 pcs/cm$^2$ (600 cpsi), a thickness of a cell wall of 0.2 mm, with a cross-sectional shape of cells formed into a rectangular (square) shape.

(Examples 2, 3)

Honeycomb fired bodies were manufactured by following the same procedure as in Example 1 except for using silica sol (average particle diameter is 15 nm) having concentrations shown in Table 1-1 as an inorganic binder solution used upon preparing a raw material composition.

(Example 4)

A honeycomb fired body was manufactured by following the same procedure as in Example 1 except for using alumina sol (average particle diameter is 15 nm, concentration is 35% by weight) in place of the silica sol upon preparing a raw material composition.

(Example 5)

A honeycomb fired body was manufactured by following the same procedure as in Example 1 except for using mixed particles of 50% by weight of γ alumina particles (secondary particles having an average particle diameter of 2 μm) and 50% by weight of β zeolite particles (secondary particles having an average particle diameter of 2 μm) in place of the γ alumina particles as inorganic particles.

(Examples 6, 7)

Honeycomb fired bodies were manufactured by following the same procedure as in Example 5 except for using silica sol (average particle diameter is 15 nm) having concentrations shown in Table 1-1 as an inorganic binder solution used upon preparing a raw material composition.

(Example 8)

A honeycomb fired body was manufactured by following the same procedure as in Example 5 except for using alumina sol (average particle diameter is 15 nm, concentration is 35% by weight) in place of the silica sol upon preparing a raw material composition.

(Example 9)

A honeycomb fired body was manufactured by following the same procedure as in Example 1 except for using mixed particles of 50% by weight of γ alumina particles (secondary particles having an average particle diameter of 2 μm) and 50% by weight of $CeO_2$ particles (secondary particles having an average particle diameter of 2 μm) in place of the secondary particles of the γ alumina particles as inorganic particles.

(Examples 10, 11)

Honeycomb fired bodies were manufactured by following the same procedure as in Example 9 except for using silica sol (average particle diameter is 15 nm) having concentrations shown in Table 1-1 as an inorganic binder solution used upon preparing a raw material composition.

(Example 12)

A honeycomb fired body was manufactured by following the same procedure as in Example 9 except for using alumina sol (average particle diameter is 15 nm, concentration is 35% by weight) in place of the silica sol upon preparing a raw material composition.

(Example 13)

A honeycomb fired body was manufactured by following the same procedure as in Example 1 except for preparing a raw material composition by the following method.
That is, 2970 g of γ alumina particles (secondary particles having an average particle diameter of 2 μm) as inorganic particles, 900 g of aluminum borate whiskers (fiber diameter is 0.5 to 1 μm, fiber length is 10 to 30 μm) as inorganic fibers, and 1660 g of silica sol (average particle diameter is 15 nm, concentration is 35% by weight) as an inorganic binder solution were mixed, and further to the resulting mixture, 320 g of methyl cellulose as an organic binder, 290 g of UNILUB (manufactured by NOF Corp.) as a lubricant, and 225 g of glycerin (manufactured by NOF Corp.) as a plasticizer were added, and the resulting mixture was mixed and kneaded to prepare a raw material composition.

(Examples 14, 15)

Honeycomb fired bodies were manufactured by following the same procedure as in Example 13 except for using silica sol (average particle diameter is 15 nm) having concentrations shown in Table 1-1 as an inorganic binder solution used upon preparing a raw material composition.

(Example 16)

A honeycomb fired body was manufactured by following the same procedure as in Example 1 except for preparing a raw material composition by the following method.
That is, 1780 g of γ alumina particles (secondary particles having an average particle diameter of 2 μm) as an inorganic particles, 400 g of aluminum borate whiskers (fiber diameter is 0.5 to 1 μm, fiber length is 10 to 30 μm) as inorganic fibers, and 3300 g of silica sol (average particle diameter is 15 nm, concentration is 35% by weight) as an inorganic binder solution were mixed, and further to the resulting mixture, 320 g of methyl cellulose as an organic binder, 290 g of UNILUB (manufactured by NOF Corp.) as a lubricant, and 225 g of glycerin (manufactured by NOF Corp.) as a plasticizer were added, and the resulting mixture was mixed and kneaded to prepare a raw material composition.

(Examples 17, 18)

Honeycomb fired bodies were manufactured by following the same procedure as in Example 16 except for using silica sol (average particle diameter is 15 nm) having concentrations shown in Table 1-1 as an inorganic binder solution used upon preparing a raw material composition.

(Comparative Examples 1, 2)

Honeycomb fired bodies were manufactured by following the same procedure as in Example 1 except for using silica sol (average particle diameter is 15 nm) having concentrations shown in Table 1-2 as an inorganic binder solution used upon preparing a raw material composition.

(Comparative Example 3)

A honeycomb fired body was manufactured by following the same procedure as in Example 4 except for using alumina sol (average particle diameter is 15 nm) having a concentration shown in Table 1-2 as an inorganic binder solution used upon preparing a raw material composition.

(Comparative Examples 4, 5)

Honeycomb fired bodies were manufactured by following the same procedure as in Example 5 except for using silica sol (average particle diameters is 15 nm) having concentrations shown in Table 1-2 as an inorganic binder solution used upon preparing a raw material composition.

(Comparative Example 6)

A honeycomb fired body was manufactured by following the same procedure as in Example 8 except for using alumina sol (average particle diameter is 15 nm) having a concentration shown in Table 1-2 as an inorganic binder solution used upon preparing a raw material composition.

(Comparative Examples 7, 8)

Honeycomb fired bodies were manufactured by following the same procedure as in Example 9 except for using silica sol (average particle diameter is 15 nm) having concentrations shown in Table 1-2 as an inorganic binder solution used upon preparing a raw material composition.

(Comparative Example 9)

A honeycomb fired body was manufactured by following the same procedure as in Example 12 except for using alumina sol (average particle diameter is 15 nm) having a concentration shown in Table 1-2 as an inorganic binder solution used upon preparing a raw material composition.

(Comparative Example 10)

A honeycomb fired body was manufactured by following the same procedure as in Comparative Example 1 except for changing the amount of an inorganic binder solution (silica sol) used upon preparing a raw material composition to 2000 g.

Here, in Examples 1 to 18 and Comparative Examples 1 to 10, SNOWTEX 30, manufactured by Nissan Chemical Industries, Ltd., was used as the silica sol having a concentration of 30% by weight, and SNOWTEX 30s condensed to prescribed concentrations were used as the silica sols having the concentrations of 35% by weight, 40% by weight, 50% by weight and 60% by weight. In addition, ALUMINASOL 520s (alumina concentration is 20% by weight), manufactured by Nissan Chemical Industries, Ltd., condensed to prescribed concentrations were used as the alumina sols having the concentrations of 30% by weight and 35% by weight.

Evaluation of honeycomb fired bodies

In the manufacture of the honeycomb fired bodies of Examples and Comparative Examples, the extrusion-molded honeycomb molded bodies were dried, and then on the dried honeycomb molded bodies, the presence or absence of the generation of cracks was evaluated. Furthermore, on the manufactured honeycomb fired bodies, their configurations (presence or absence of deformation) were evaluated.
The results are shown in Tables 1-1 and 1-2.

Evaluation of presence or absence of generation of cracks

The presence or absence of the generation of cracks was evaluated by visually observing the dried honeycomb molded bodies.

Evaluation of configurations of honeycomb fired bodies

The flatness of the side face of the manufactured honeycomb fired bodies was measured by the following method, and the honeycomb fired body in which the flatness of all side faces was 0.5 mm or less was rated as +, and the honeycomb fired body in which the flatness of any one side face was more than 0.5 mm was rated as -.
Here, the flatness of the honeycomb fired bodies was evaluated by plotting a position coordinate of the side face of the honeycomb fired bodies by a coordinate measuring machine (BH-V507, manufactured by Mitutoyo Corp.).

| | Inorganic particles | Inorganic binder | Concentration of inorganic binder *(note) (% by weight) | Blending amount of inorganic binder (% by weight) | Presence or absence of cracks | Evaluation of configuration |
|---|---|---|---|---|---|---|
| Example 1 | γ alumina | silica sol | 35 | 47 | none | + |
| Example 2 | γ alumina | silica sol | 40 | 47 | none | + |
| Example 3 | γ alumina | silica sol | 50 | 47 | none | + |
| Example 4 | γ alumina | alumina sol | 35 | 47 | none | + |
| Example 5 | γ alumina + β zeolite | silica sol | 35 | 47 | none | + |
| Example 6 | γ alumina + β zeolite | silica sol | 40 | 47 | none | + |
| Example 7 | γ alumina + β zeolite | silica sol | 50 | 47 | none | + |
| Example 8 | γ alumina + β zeolite | alumina sol | 35 | 47 | none | + |
| Example 9 | γ alumina + $CeO_2$ | silica sol | 35 | 47 | none | + |
| Example 10 | γ alumina + $CeO_2$ | silica sol | 40 | 47 | none | + |
| Example 11 | γ alumina + $CeO_2$ | silica sol | 50 | 47 | none | + |
| Example 12 | γ alumina + $CeO_2$ | alumina sol | 35 | 47 | none | + |
| Example 13 | γ alumina | silica sol | 35 | 30 | none | + |
| Example 14 | γ alumina | silica sol | 40 | 30 | none | + |
| Example 15 | γ alumina | silica sol | 50 | 30 | none | + |
| Example 16 | γ alumina | silica sol | 35 | 60 | none | + |
| Example 17 | γ alumina | silica sol | 40 | 60 | none | + |
| Example 18 | γ alumina | silica sol | 50 | 60 | none | + |

*(note) Blending amount of inorganic binder: Blending amount of inorganic binder solution to total amount of inorganic particles, inorganic whiskers, and inorganic binder

[Table 1-2]

| | Inorganic particles | Inorganic binder | Concentration of inorganic binder *(note) (% by weight) | Blending amount of inorganic binder (% by weight) | Presence or absence of cracks | Evaluation of configuration |
|---|---|---|---|---|---|---|
| Comparative Example 1 | γ alumina | silica sol | 30 | 47 | present | + |
| Comparative Example 2 | γ alumina | silica sol | 60 | 47 | none | - |

(continued)

| | Inorganic particles | Inorganic binder | Concentration of inorganic binder *(note) (% by weight) | Blending amount of inorganic binder (% by weight) | Presence or absence of cracks | Evaluation of configuration |
|---|---|---|---|---|---|---|
| Comparative Example 3 | γ alumina | alumina sol | 30 | 47 | present | + |
| Comparative Example 4 | γ alumina + β zeolite | silica sol | 30 | 47 | present | + |
| Comparative Example 5 | γ alumina + β zeolite | silica sol | 60 | 47 | none | - |
| Comparative Example 6 | γ alumina + β zeolite | alumina sol | 30 | 47 | present | + |
| Comparative Example 7 | γ alumina + $CeO_2$ | silica sol | 30 | 47 | present | + |
| Comparative Example 8 | γ alumina + $CeO_2$ | silica sol | 60 | 47 | none | - |
| Comparative Example 9 | γ alumina + $CeO_2$ | alumina sol | 30 | 47 | present | + |
| Comparative Example 10 | γ alumina | silica sol | 30 | 41 | none | - |

*(note) Blending amount of inorganic binder: Blending amount of inorganic binder solution to total amount of inorganic particles, inorganic whiskers, and inorganic binder

As is apparent from the results shown in Tables 1-1 and 1-2, by using the inorganic binder solution having a concentration of 35 to 50% by weight with a blending amount of 30 to 60% by weight, it is possible to manufacture a honeycomb fired body having a desired configuration, which does not generate cracks and does not cause deformations upon drying the honeycomb molded body.

On the other hand, when the concentration of the inorganic binder solution was less than 35% by weight, the cracks were observed upon drying the honeycomb molded body, although the deformation in the configuration of the honeycomb fired body was not observed. In addition, when the concentration of the inorganic binder solution is more than 50% by weight, cracks were not observed in the dried honeycomb molded body, but the manufactured honeycomb fired body was deformed.

In addition, in Examples and Comparative Examples described above, one honeycomb fired body was manufactured and this honeycomb fired body was evaluated as a honeycomb structured body, but in the case where an aggregated honeycomb structured body as shown in Figs. 1 (a) and 1 (b) is manufactured by using a plurality of the honeycomb fired bodies, similar results are presumably obtained.

BRIEF DESCRIPTION OF THE DRAWINGS

Fig. 1 (a) is a perspective view schematically showing one example of a honeycomb fired body manufactured by the method for manufacturing a honeycomb structured body of the present invention, and Fig. 1(b) is a perspective view schematically showing one example of a honeycomb structured body of the present invention formed by using the honeycomb fired body shown in Fig. 1(a).
Fig. 2 is a perspective view schematically showing another example of the honeycomb structured body manufactured by the method for manufacturing a honeycomb structured body of the present invention.

EXPLANATION OF SYMBOLS

**EP 1 923 373 B1**

10, 30 Honeycomb structured body
13 Sealing material layer (coat layer)
14 Sealing material layer (adhesive layer)
20 Honeycomb fired body
21, 31 Cell
22, 32 Cell wall

**Claims**

1. A method for manufacturing a honeycomb structured body, comprising:

   a preparing step of mixing:

      inorganic particles;
      at least one of inorganic fibers and inorganic whiskers; and
      an inorganic binder solution, to prepare a raw material composition;

   a molding step of manufacturing a pillar-shaped honeycomb molded body having a large number of cells disposed in parallel with one another in a longitudinal direction with a cell wall therebetween by extrusion-molding said raw material composition; and
   a firing step of carrying out a firing treatment on said honeycomb molded body to manufacture a honeycomb fired body,

   wherein
   a blending amount of said inorganic binder solution is 30 to 60% by weight to the total amount of said inorganic particles, at least one of inorganic fibers and inorganic whiskers, and said inorganic binder solution, and
   a concentration of said inorganic binder solution is 35 to 50% by weight.

2. The method for manufacturing a honeycomb structured body according to claim 1,
   wherein
   said inorganic binder solution is at least one kind selected from the group consisting of alumina sol, silica sol, titania sol, a suspension of sepiolite and a suspension of attapulgite.

**Patentansprüche**

1. Verfahren zur Herstellung eines Körpers mit Wabenstruktur, umfassend:

   einen Herstellungsschritt durch Mischen von:

      anorganischen Partikeln;
      zumindest einem von anorganischen Fasern und anorganischen Fadenkristallen; und
      einer Lösung eines anorganischen Bindemittels,

   um eine Ausgangsmaterial-Zusammensetzung herzustellen;
   einen Formschritt zur Herstellung eines säulenförmigen Waben-Formkörpers, der eine grosse Anzahl von Zellen aufweist, die in Längsrichtung zueinander parallel angeordnet sind, wobei eine Zellwand hierzwischen angeordnet ist, durch Extrusionsformen der Ausgangsmaterial-Zusammensetzung; und
   einen Brennschritt zur Durchführung einer Brennbehandlung an dem Waben-Formkörper, um einen gebrannten Wabenkörper herzustellen,

   worin
   die Mischungsmenge der Lösung des anorganischen Bindemittels 30 bis 60 Gew.%, bezogen auf die Gesamtmenge der anorganischen Partikel, zumindest einem von anorganischen Fasern und anorganischen Fadenkristallen und der Lösung des anorganischen Bindemittels, beträgt und
   die Konzentration der Lösung des anorganischen Bindemittels 35 bis 50 Gew.% beträgt.

**2.** Verfahren zur Herstellung eines Körpers mit Wabenstruktur gemäss Anspruch 1,
worin
die Lösung des anorganischen Bindemittels zumindest eine ist, ausgewählt aus der Gruppe bestehend aus Aluminiumoxidsol, Silicasol, Titanoxidsol, einer Suspension von Sepiolit und einer Suspension von Attapulgit.

**Revendications**

**1.** Procédé pour fabriquer un corps structuré en nid d'abeilles comprenant :

une étape de préparation comprenant le mélange :

de particules inorganiques ;
d'au moins l'une de fibres inorganiques et de trichites inorganiques ; et
d'une solution de liant inorganique,
pour préparer une composition de matière première ;
une étape de moulage comprenant la fabrication d'un corps moulé en nid d'abeilles en forme de pilier ayant un grand nombre de cellules disposées parallèlement entre elles dans une direction longitudinale avec une paroi de cellules entre elles par moulage par extrusion de ladite composition de matière première ; et
une étape de cuisson comprenant la mise en oeuvre d'un traitement de cuisson sur ledit corps moulé en nid d'abeilles pour fabriquer un corps cuit en nid d'abeilles,

où
une quantité de mélange de ladite solution de liant inorganique est 30 à 60 % en poids par rapport à la quantité totale desdites particules inorganiques, d'au moins l'une de fibres inorganiques et de trichites inorganiques et de ladite solution de liant inorganique, et
une concentration de ladite solution de liant inorganique est 35 à 50 % en poids.

**2.** Procédé pour fabriquer un corps structuré en nid d'abeilles selon la revendication 1
où
ladite solution de liant inorganique est un moins un type choisi dans le groupe consistant en un sol d'alumine, un sol de silice, un sol d'oxyde de titane, une suspension de sépiolite et une suspension d'attapulgite.

Fig. 1

(a)

20

a

22

21

(b)

10

13

14

20

15

Fig. 2

30

b

32

31

**EP 1 923 373 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005218935 A
- JP 2005349378 A
- JP 5213681 A
- US 2006177629 A1